# EUROPÄISCHE PATENTSCHRIFT

(11) **EP 3 120 362 B1**
(45) Veröffentlichungstag und Bekanntmachung des Hinweises auf die Patenterteilung: **03.10.2018**
(21) Anmeldenummer: 15713402.4
(22) Anmeldetag: 17.03.2015
(51) Int. Cl.: G21C 19/07, G21C 19/40

(54) **KÜHLELEMENT ZUM KÜHLEN DER KÜHLFLÜSSIGKEIT IN EINEM BRENNELEMENTBECKEN, ZUGEHÖRIGES SYSTEM, BRENNELEMENTBECKEN UND KERNTECHNISCHE ANLAGE**
COOLING ELEMENT FOR COOLING THE COOLANT IN A FUEL ELEMENT POND, ASSOCIATED SYSTEM, FUEL ELEMENT POND AND NUCLEAR FACILITY
ÉLÉMENT DE REFROIDISSEMENT POUR REFROIDIR LE LIQUIDE DE REFROIDISSEMENT D'UNE PISCINE DE REFROIDISSEMENT, SYSTÈME ASSOCIÉ, PISCINE DE REFROIDISSEMENT ET INSTALLATION NUCLÉAIRE

(30) Priorität: 19.03.2014 DE 102014205085
(43) Veröffentlichungstag der Anmeldung: 25.01.2017
(73) Patentinhaber: Framatome GmbH, 91052 Erlangen (DE)
(72) Erfinder: FUCHS, Thomas, 50389 Wesseling (DE); ORNOT, Leo, 90449 Nürnberg (DE); RECK, Markus, 91056 Erlangen (DE); REUTER, Matthias, 04539 Groitzsch (DE)
(74) Vertreter: Kugler, Jörg
(86) Internationale Anmeldenummer: PCT/EP2015/055532
(87) Internationale Veröffentlichungsnummer: WO 2015/140154

(56) Entgegenhaltungen:
- GB-A- 2 430 999
- US-A- 3 800 857

## Beschreibung

Die Erfindung betrifft ein Kühlelement zum Kühlen der Kühlflüssigkeit in einem Brennelementbecken, in dem ein Brennelementgestell zur Aufnahme von Brennelementen angeordnet ist, wobei das Kühlelement einen Wärmeübertrager (Wärmetauscher) umfasst, der zum Anschuss an einen Kühlkreislauf ausgebildet ist. Sie betrifft weiterhin ein System zum Kühlen der Kühlflüssigkeit in einem Brennelementbecken, ein Brennelementbecken sowie eine kerntechnische Anlage.

Zur Kühlung von Brennelementbecken werden derzeit hauptsächlich zwei technisch unterschiedliche Lösungen eingesetzt. Die erste Lösung sieht die unmittelbare Kühlung des Beckenwassers vor. Hierzu wird das Wasser mittels einer Pumpe dem Becken entnommen, in einer externen Kühleinheit gekühlt und dann in das Becken zurückgespeist. Falls es hierbei zu einer Leckage im Kühlkreislauf kommt, droht ein Absenken des Beckenfüllstandes.

Eine zweite gebräuchliche Lösung beruht auf der Verwendung von Einhängekühlern. In diesem Fall wird das Beckenwasser mittels eines Zwischenkühlkreislaufes gekühlt. Anders als bei der zuvor genannten Methode besteht bei diesem System nicht die Gefahr einer Beckenleckage, da einerseits keine Beckendurchdringungen benötigt werden und andererseits das Beckenwasser im Becken verbleibt. Jedoch beansprucht ein derartiges System aufgrund der notwendigen Wärmeübertragungsflächen einen nicht unerheblichen Einbauraum im Lagerbecken.

Aus der DE 102 17 969 A1 ist ein Zwischenlagersystem für Brennelemente einer kerntechnischen Anlage mit einem passiven einphasigen Kühlkreislauf bekannt. Der Innenraum eines Nasslagerbeckens wird durch in das Nasslagerbecken eingehängte Wärmetauscher gekühlt.

Die DE 29 44 962 A1 offenbart ein Lagerbecken für Brennelemente von Kernreaktoren, wobei in das Beckenwasser Wärmetauscher tauchen, die ohne feste Verbindung mit der Beckenwand angehängt sind.
Die US 2012/0051484 A1 beschreibt ein Lagerbecken für Brennelemente, bei dem Wärmetauscher am Beckenrand angebracht sind, mit einem zweiphasigen Kühlkreislauf, bei dem das Kühlmedium in den Wärmetauschern einen Phasenübergang durchführt.

Die GB 2 430 999 A zeigt ein Kühl- oder Heizelement, welches einen Wärmeübertrager und Anschlüsse umfasst, die zum Anschluss an einen Kühl- oder Heizkreislauf geeignet sind. Der Wärmeübertrager ist zylindrisch ausgebildet und weist bei einer Länge von etwa 200 cm einen Durchmesser von 9 cm auf.

Die US 3 800 857 A zeigt ein Brennelementebecken mit Brennelementgestell zur Aufnahme von nuklearen Brennelementen. In entsprechende Öffnungen der Oberseite des Brennelementgestelles sind Behälter eingeschoben, in denen jeweils ein Brennelement enthalten ist und durch die Schutzgas geleitet wird.

Die im Rahmen der "Post Fukushima" Maßnahmen geforderten Nachrüstungen von redundanten und diversitären Beckenkühlungen, welche überwiegend auf der zweiten geschilderten Variante basieren, stehen häufig vor dem Problem, dass der notwendige Bauraum in den bestehenden Becken zu klein ist, als dass eine entsprechende Menge von Einhängekühlern untergebracht werden kann. Häufig besteht dann der einzige Ausweg in einer kostenintensiven und genehmigungstechnisch aufwändigen Neuordnung der Lagerstelle für die Brennelemente. Des Weiteren ist die erdbebentechnisch sichere Anbringung von Einhängekühlern problematisch, da nur ungern die bestehenden Beckenstrukturen durch Schweißungen oder Bohrungen modifiziert werden.

Der Erfindung liegt daher die Aufgabe zugrunde, eine kerntechnische Anlage bereitzustellen, in der ein Kühlelement platzsparend in das Brennelementkühlbecken integriert ist. Die Aufgabe wird durch eine Anlage gemäß Anspruch 1 gelöst.

In Bezug auf das Kühlelement wird die oben genannte Aufgabe dadurch gelöst, dass das Kühlelement derart dimensioniert und konfiguriert ist, dass es in einer freien Stelle / Position für ein Brennelement in dem Brennelementgestell angeordnet und/oder befestigt wird. Vorteilhafte Ausgestaltungen der Erfindung sind Gegenstand der Unteransprüche.

Die Erfindung geht von der Überlegung aus, dass durch heutige Sicherheitsanforderungen an kerntechnische Anlagen der Bedarf an zuverlässigen, modular einsetzbaren und redundant oder ergänzend nutzbaren Kühlsystemen drastisch gestiegen ist. Bekannte Lösungen sind gewöhnlich baulich aufwändig, zudem ergeben sich gegebenenfalls Unsicherheiten bezüglich der Sicherheit des neuen Designs und damit auch der erneuten Zulassung.

Es wäre also schon aus diesen Gründen eine technische Lösung wünschenswert, deren Umsetzung keine oder nur geringe Modifikationen der Ausgestaltungen des Kühlbeckens bzw. der Kühlsysteme erfordert.

Wie nunmehr erkannt wurde, lässt sich eine derartige technische Lösung zur Kühlung des Beckenwassers realisieren, indem bereits vorhandene Bauräume bzw. Räume, die bislang zum Anordnen von anderen Komponenten genutzt wurden, für die Unterbringung der Kühlelemente genutzt werden. Wie weiter erkannt wurde, eignen sich dafür besonders freie Slots bzw. Schächte im Brennelementgestell. Dazu müssen die Kühlelemente entsprechend dimensioniert werden, d. h. hinsichtlich ihres Durchmessers bzw. Querschnitts und ggf. auch hinsichtlich ihrer Länge an die vorgegebenen Dimensionen angepasst werden. Zudem sollten sie derart konfiguriert sein, dass sie sich sicher einfügen und wieder entnehmen lassen und stabil angeordnet werden können. Das jeweilige Kühlelement kann unter Umständen auch länger als das Brennelement sein, dessen Platz es einnimmt - es kann beispielsweise oben aus dem ihm zugeordneten Kasten oder Schacht des Brennelementgestells heraus ragen. Am oberen Ende kann auch eine Art Trichter angebracht sein, der das Beckenwasser leitet - eine Art Einlauf.

Vorteilhafterweise weist das jeweilige Kühlelement also prinzipiell die typischen Abmessungen eines Brennelements auf. Rein beispielhaft im Sinne eines groben Richtwertes für die typische Dimensionierung sei in diesem Zusammenhang erwähnt, dass ein typisches Brennelement eines Druckwasserreaktors 15x15 Brennstäbe enthält und ca. 4500 mm Länge und einen quadratischen Querschnitt mit 250 mm Kantenlänge besitzt. Ein Brennelement eines Druckwasserreaktors vom Typ EPR hat beispielsweise 18x18 Brennstäbe und dementsprechend eine größere Kantenlänge, Brennelemente für Siedewasserreaktoren haben z. B. 8x8 Brennstäbe und dementsprechend eine kleinere Kantenlänge. Es gibt aber auch z. B. Brennelemente mit sechseckigem Querschnitt oder noch anderer Formgebung. Darüber hinaus kann das Kühlelement von den typischen Maßen abweichen, wenn das auch als Brennelementkasten bezeichnete Brennelementgestell speziell für diese Anwendung angefertigte Sondermaße aufweist.
Vorzugsweise ist das Kühlelement als Einhängekühlelement zum Einhängen in das Brennelementgestell ausgebildet. Bevorzugt ist das Kühlelement nach der Montage dann in einer der freien Stellen / Positionen für ein Brennelement angeordnet. Alternativ ist das Kühlelement neben den Brennelementkästen bzw. außerhalb der Außenwand des Brennelementgestells angeordnet. Ein Brennelementschacht dient dann zur Aufnahme einer Halterung, die das Kühlelement fixiert. Bei dieser Variante sind die räumlichen Abmessungen des Kühlelements nicht durch die Schachtgröße limitiert.

In einer möglichen Anordnung weist der Wärmetauscher einen Kühlmittelkanal zur Durchleitung eines in dem zugehörigen Kühlkreislauf geführten Kühlmittels auf, wobei das Kühlelement wenigstens einen Kühlmittelzuleitungsanschluss und wenigstens einen Kühlmittelableitungsanschluss zum Anschluss an bzw. zur Integration in den Kühlkreislauf umfasst. Ein derartiges Kühlelement eignet sich insbesondere für einen einphasigen Kühlkreislauf, bei dem das Kühlmittel im Wärmetauscher Wärme aufnimmt, dabei aber nicht seinen Aggregatzustand ändert.

In einer bevorzugten Anordnung ist das Kühlelement jedoch zur Integration in einen zweiphasigen Kühlkreislauf ausgelegt, wobei wenigstens ein Kondensatkanal zur Zuführung des Kühlmittels in einen Kondensatsammler vorgesehen ist, und wobei der Wärmetauscher wenigstens einen Verdampferkanal zur Führung des verdampften Kühlmittels in einen Dampfsammler umfasst und wobei das Kühlelement weiterhin eine Vorlaufleitung und eine Rücklaufleitung zum Anschluss an den Kühlkreislauf umfasst. Zweiphasige Kühlkreisläufe oder Wärmetransportkreisläufe, in denen das zirkulierende Kühlmittel seinen Aggregatzustand im Verdampfer von flüssig nach gasförmig und später in einem - außerhalb des Brennelementbeckens befindlichen - Kondensator wieder zurück ändert, ermöglichen im Vergleich zu einphasigen Kühlkreisläufen im Allgemeinen erhöhte Wärmetransportraten.

In konstruktiver Hinsicht weist das jeweilige Kühlelement / der Kühler also bevorzugt eine Mehrzahl von rohrförmigen Kühlmittelkanälen für das im Kühlkreislauf zirkulierende Kühlmittel auf, die in der Einbauposition bevorzugt parallel zur Längsrichtung der Schächte in dem Brennelementgestell orientiert sind. Davon wird vorzugsweise ein vergleichsweise geringer Anteil zur Kondensatzufuhr zum unteren Kondensatsammler (Abwärtsströmung) und der größere Anteil zur Verdampfung des Kondensats bzw. zur Führung des so erzeugten Dampf-Flüssigkeit-Gemisches zum oberen Dampfsammler (Aufwärtsströmung) verwendet. Der Kühler kann auch anstelle der Rohre / zusätzlich dazu durchströmte Platten aufweisen. Zwischen den Rohren oder Platten fließt das Beckenwasser, bevorzugt von oben nach unten, durch entsprechende Hohlräume oder Kanäle und wird durch Wärmeabgabe an das dabei vorzugsweise zum Sieden gebrachte Kühlmittel im Kühlkreislauf gekühlt. Der Dampf- bzw. Kondensatsammler verbindet einerseits die strömungsmäßig parallel geschalteten Rohre miteinander, andererseits sollte mittels geeigneter Aussparungen oder dergleichen gewährleistet sein, dass das Beckenwasser durch ihn hindurchfließen kann.

Die Auslegung, welcher Querschnittsflächenanteil des Kühlelements für die das Kühlmittel im Kühlkreislauf führenden Rohre / Platten verwendet wird, und welcher für die Abwärtsströmung des Beckenwassers verwendet wird, erfolgt im Einzelfall nach den gegebenen thermodynamischen Randbedingungen.

Gegebenenfalls können auch mehrere solcher Kühlelemente funktionell zusammengefasst werden - beispielsweise durch einen gemeinsamen Dampfsammler bei entsprechender Verschaltung der Rohr- bzw. Anschlussleitungen.

In den verschiedenen Anordnungen können die Leitungen, mit denen das Kühlelement an dem Kühlsystem angeschlossen wird, starr oder flexibel ausgeführt sein. Sie sollten in jedem Fall druckfest ausgebildet sein.
In Bezug auf das System wird die oben genannte Aufgabe gelöst mit einem Brennelementgestell und wenigstens einem darin einsetzbaren bzw. eingesetzten Kühlelement der beschriebenen Art.
In Bezug auf das Brennelementbecken wird die oben genannte Aufgabe gelöst, indem das Brennelementbecken mit einer Kühlflüssigkeit, insbesondere Wasser (Beckenwasser), gefüllt ist und indem in ihm ein oben beschriebenes System angeordnet ist. Das Brennelementbecken ist bevorzugt ein Lagerbecken für Brennelemente, insbesondere ein Nasslagerbecken, Abklingbecken, Zwischenlagerbecken oder Endlagerbecken.
In Bezug auf die kerntechnische Anlage wird die oben genannte Aufgabe gelöst mit einem derartigen Brennelementbecken. Die kerntechnische Anlage umfasst vorzugsweise weiterhin ein nach Art eines Kreislaufs ausgestaltetes Kühlsystem mit wenigstens einem Rückkühler zum Anschluss des jeweiligen Kühlelementes. Das Kühlsystem kann bedarfsweise aktiv oder passiv ausgestaltet sein.
Die Vorteile der Erfindung liegen insbesondere darin, dass mittels der Kühlelemente eine verhältnismäßig einfache und robuste Kühlung von Brennelementlagerbecken erreicht wird. Dadurch wird eine unkomplizierte Modifikation bzw. Ergänzung von Beckenkühlsystemen ermöglicht. Durch den modularen Aufbau sind verschiedenartige Lösungsansätze möglich, die sowohl redundante als auch diversitäre Kühloptionen beinhalten. Es wird zudem eine temporäre Kühlung bei Kernvollausladung ermöglicht. Da in Zukunft eventuell andere Abbrände als bislang realisiert werden, kann ein solches Kühlsystem sehr variabel eingesetzt werden. Es kann auch effektiver auf eine Reduktion der Wärmelast durch Abklingvorgänge reagiert werden.

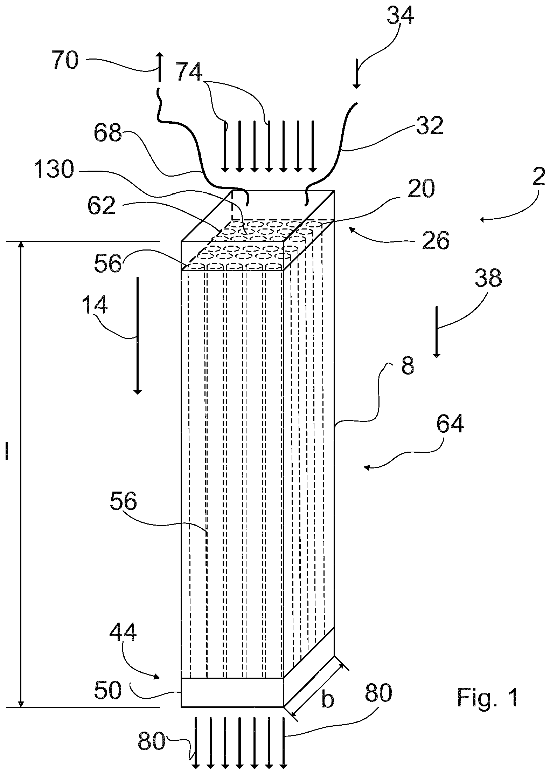

Ein Ausführungsbeispiel der Erfindung wird anhand einer Zeichnung näher erläutert. Darin zeigen in stark schematisierter Darstellung:
- Fig. 1: ein Kühlelement in einer perspektivischen Ansicht,
- Fig. 2: in Draufsicht ein System zum Kühlen der Kühlflüssigkeit in einem Brennelementbecken, umfassend ein Brennelementgestell mit darin angeordneten Brennelementen und zwei darin angeordneten Kühlelementen gemäß Fig. 1,
- Fig. 3: in Draufsicht ein mit einem Kühlsystem gemäß FIG. 2 ausgestattetes Brennelementbecken, und
- Fig. 4: einen Querschnitt durch ein Kernkraftwerk mit einem Brennelementbecken und einem zugehörigen Kühlsystem gemäß FIG. 3.
Gleiche Teile sind in allen Figuren mit denselben Bezugszeichen versehen.
Ein in Fig. 1 dargestelltes Kühlelement 2 umfasst einen Kühlelementkörper 8, der eine Anzahl von in Längsrichtung 14 des Kühlelementes 2 verlaufenden Kondensatkanälen 20 und Verdampfungskanälen 56, die als parallel orientierte Rohre ausgebildet sind, aufweist. Statt einer Mehrzahl von Rohren kann auch ein einzelnes Rohr, vorzugsweise mit einem entsprechend großen Querschnitt verwendet werden (oder auch Platten). Über wenigstens eine an das Kühlelement in einem Kopfbereich 26 angeschlossene Vorlaufleitung 32 ist das Kühlelement 2 mit einem Kondensator (hier nicht eingezeichnet) eines Kühlkreislaufes verbunden bzw. in diesen Kühlkreislauf geschaltet.
Über die Vorlaufleitung 32 wird dem Kühlelement 2 Kondensat, d. h. Kühlmittel in flüssiger Form, in durch einen Pfeil 34 verdeutlichter Vorlaufrichtung zugeführt, welches in den Kondensatkanälen 20 entlang eines Gravitationsvektors 38, der in Richtung der wirkenden Erdbeschleunigung bzw. Gravitationskraft an der Erdoberfläche zeigt, zu einem in einem Fußbereich 44 des Kühlelementes 2 angeordneten Kondensatsammler 50 hinab fließt. Von dort steigt das - im Kondensatsammler 50 zwar vorgewärmte aber immer noch flüssig vorliegende - Fluid bzw. Kühlmittel durch im Kühlelement 2 angeordnete rohrförmige Verdampferkanäle 56 in zum Gravitationsvektor 38 entgegengesetzter Richtung in einen am Kopfbereich 26 angeordneten Dampfsammler 62. Die Verdampferkanäle 56 bilden damit einen als Kühlmittelverdampfer wirksamen Wärmetauscher bzw. Wärmeübertrager 64.

Durch den Verdampfungsvorgang während des Aufsteigens und Verdampfens des Kühlmittels wird thermische Energie aus dem Beckenwasser aufgenommen, welches sich dadurch abkühlt. Dadurch wird ein zweiphasiges Kühlsystem verwirklicht, bei dem das im Kühlkreislauf zirkulierende Kühlmittel während des Durchlaufens des Kühlelementes 2 seinen Phasenzustand von flüssig nach gasförmig ändert.

Von dem Dampfsammler 62 wird der Dampf über wenigstens eine Rücklaufleitung 68 - vorzugsweise in Gestalt einer Steigleitung - dem zur Rückkühlung des Kühlmittels vorgesehenen Kondensator (in FIG. 1 nicht dargestellt) in durch einen Pfeil 70 dargestellter Rücklaufrichtung zugeführt und dort kondensiert. Über die Vorlaufleitung 32 - vorzugsweise in Gestalt einer Fallleitung - bzw. wird das Kondensat erneut dem Kühlelement 2 zugeführt, so dass sich der Kreislauf schließt. Der Massenstrom im Inneren des Kühlkreislaufes kann entweder über eine aktive mechanische (Pumpen etc.) oder eine passive Lösung (nach dem Prinzip der Naturkonvektion bzw. freien Konvektion) realisiert werden.

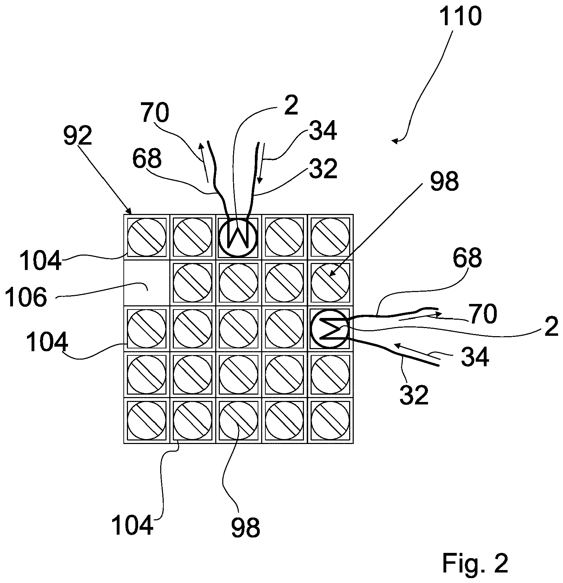

Durch die beschriebene Kühlung wird beckenseitig ein Dichtegradient erzeugt, so dass eine Strömung des Beckenwassers in Richtung des Gravitationsvektors 38 induziert wird. Die Abwärtsströmung ist ein Teil einer sogenannten Konvektionsrolle; der andere Teil wird in den benachbarten Brennelementen 98 durch eine entsprechende Aufwärtsströmung realisiert. Das Beckenwasser tritt am Kopfbereich 26 des Kühlelementes 2 in zwischen den Verdampferkanälen 56 angeordnete, in Längsrichtung verlaufende Zwischenräume 130 ein, was durch Pfeile 74 verdeutlicht wird. Das Beckenwasser strömt dann durch das Kühlelement 2 in Richtung des Gravitationsvektors 38, wobei es seine Wärme an das in den Verdampferkanälen 56 aufsteigende Kühlmittel abgibt. Es tritt wieder am Fußende 44 des Kühlelementes 2 aus, was durch Pfeile 80 verdeutlicht wird.
Wenn das Kühlelement 2 nach oben etwas aus dem Brennelementgestell 92 herausragt, dann muss das Beckenwasser nicht durch entsprechende Aussparungen im Dampfsammler 62 hindurch, sondern kann seitlich zufließen.
Das Kühlelement 2 ist hinsichtlich seiner räumlichen Abmessungen bzw. Dimensionierungen dazu ertüchtigt, in ein in Fig. 2 in Richtung des Gravitationsvektors 38, also im Wesentlichen von oben, dargestelltes Brennelementlagergestell oder kurz Brennelementgestell 92 eingesetzt bzw. eingebaut zu werden. Das Kühlelement 2 ist dazu als Einhängekühler ausgebildet. Zum Einhängen in das Brennelementgestell 92 besitzt es eine geeignete Formgebung und ggf. geeignete Vorsprünge oder Halteelemente. Das Kühlelement 2 kann aber auch auf dem Boden des Brennelementgestells 92 aufsitzen.
In Fig. 2 ist das Brennelementgestell 92 mit eingesetzten Brennelementen 98 in einer Draufsicht von oben gezeigt. Das Brennelementgestell 92 ist im Querschnitt bzw. in der Draufsicht betrachtet als zweidimensionales Gitter ausgestaltet. In das Brennelementgestell 92 sind mehrere Brennelemente 98 eingesetzt. Das Brennelementgestell 92 weist hier eine freie Position 106 auf.

Das Brennelementgestell 92 weist im vorliegenden Beispiel 25 Einbau- bzw. Einsetzplätze bzw. Schächte 104 (Slots) für Brennelemente 98 auf. An zwei der Einsetzplätze sind anstelle von Brennelementen 98 Kühlelemente 2 eingesetzt. Im Extremfall können sämtliche Einsetzplätze mit Kühlelementen 2 belegt sein.
Die Kühlelemente 2 weisen dabei in ihrer Längsrichtung 14 eine Länge I auf, die im Wesentlichen derjenigen der Brennelemente 98 entspricht. Die Länge I kann aber auch etwas größer gewählt sein, so dass das jeweilige Kühlelement 2 dann nach oben aus dem Brennelementgestell 92 herausragt und das Beckenwasser auch seitlich einfließen kann (siehe oben). Jedes Kühlelement 2 besitzt hier einen über seine gesamte Länge hinweg im Wesentlichen konstanten quadratischen Querschnitt. Die Breite b des jeweiligen Kühlelementes 2 entspricht im Wesentlichen der lichten Weite des zu seiner Aufnahme vorgesehenen Schachtes 104. Aufgrund dieser Dimensionierungen fügt sich das jeweilige Kühlelement 2 in einen Schacht 104 in ähnlicher Weise wie ein Brennelement 98 ein.
In einer nicht näher dargestellten Variante können Kühlelemente 2 außerhalb des Brennelementgestells 92 angeordnet sein, wobei die Fixierung aber am Brennelementgestell 92 erfolgt, und zwar bevorzugt mittels einer Halterung, die in einen leeren Schacht 104 eingreift und darin befestigt ist.
Das Brennelementgestell 92 und die darin / daran angeordneten Kühlelemente 2 bilden ein System 110 zum Kühlen der Kühlflüssigkeit in einem Brennelementbecken.

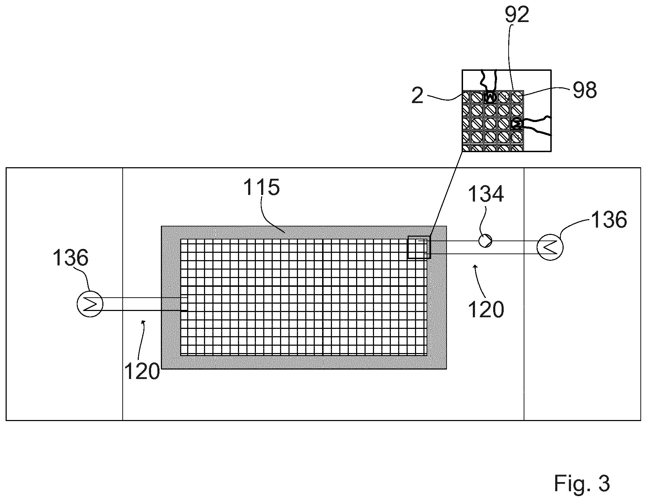

Fig. 3 zeigt schematisch ein Brennelementbecken 115, hier zum Beispiel bei einer externen Lagerstätte (Zwischenlager), mit einem darin angeordneten Brennelementgestell 92, welches zumindest an einigen der ursprünglich für Brennelemente 98 vorgesehenen Positionen Kühlelemente 2 aufnimmt. Die Kühlelemente 2 sind jeweils einzeln oder zu Gruppen gebündelt in Kühlkreisläufe 120 geschaltet. Die Kühlkreisläufe 120 können sowohl aktiv (durch entsprechende Pumpen 134) als auch passiv betrieben werden. Zur Rückkühlung des in den Kühlelementen 2 erwärmten Kühlmittels sind entsprechende Rückkühler 136 innerhalb oder außerhalb des das Brennelementbecken 115 umschließenden Gebäudes angeordnet und an eine geeignete Wärmesenke thermisch angekoppelt. Bei einem zweiphasigen Kühlkreislauf 120, der bevorzugt zur Anwendung kommt, wirken die Kühlelemente 2 als Verdampfer und die Rückkühler 136 als Kondensatoren für das im Kreislauf geführte Kühlmittel.

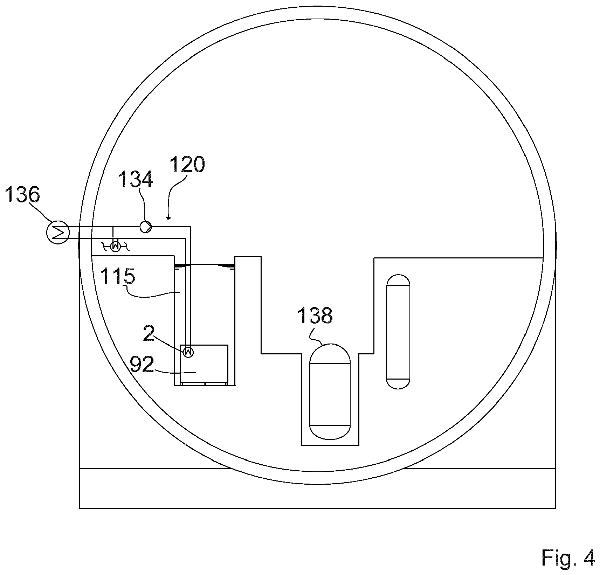

Entsprechendes gilt analog für das in Fig. 4 beispielhaft gezeigte Kernkraftwerk mit einem im Reaktorgebäude, neben der Reaktorgrube mit dem Reaktordruckbehälter 138 liegenden Brennelementbecken 115 (Abklingbecken).

### Bezugszeichenliste

- 2: Kühlelement
- 8: Kühlelementkörper
- 14: Längsrichtung
- 20: Kondensatkanal
- 26: Kopfbereich
- 32: Vorlaufleitung
- 34: Pfeil
- 38: Gravitationsvektor
- 44: Fußbereich
- 50: Kondensatsammler
- 56: Verdampferkanal
- 62: Dampfsammler
- 64: Wärmeübertrager
- 68: Rücklaufleitung
- 70: Pfeil
- 74: Pfeil
- 80: Pfeil
- 92: Brennelementgestell
- 98: Brennelement
- 104: Schacht
- 106: leere Position
- 110: System
- 115: Brennelementbecken
- 120: Kühlkreislauf
- 130: Zwischenraum
- 134: Pumpe
- 136: Rückkühler
- 138: Reaktordruckbehälter

- l: Länge
- b: Breite

## Patentansprüche

1. Kerntechnische Anlage mit einem Brennelementbecken (115), welches mit einer Kühlflüssigkeit gefüllt ist und in dem ein Brennelementgestell (92) angeordnet ist, welches Schächte (104) zur Aufnahme von Brennelementen (98) aufweist, und wobei zumindest ein als Wärmetauscher wirksames, in einen Kühlkreislauf (120) schaltbares und von einem Kühlmittel durchströmbares Kühlelement (2) in die Kühlflüssigkeit eintaucht,
**dadurch gekennzeichnet, dass**
im Gebrauch die in den Schächten (104) aufgenommenen Brennelemente (98) in direktem Kontakt mit der Kühlflüssigkeit im Brennelementbecken (115) stehen und dadurch dass das Kühlelement (2) in einem der Schächte (104) anstelle eines Brennelements (98) angeordnet ist.

2. Kerntechnische Anlage nach Anspruch 1, wobei das Kühlelement (2) zum Einschub in einen der Schächte (104) in dem Brennelementgestell (92) ausgebildet ist.

3. Kerntechnische Anlage nach Anspruch 2, wobei das Kühlelement (2) zumindest in Bezug auf den Querschnitt die Abmessungen eines zum Einschub in das Brennelementgestell (92) vorgesehenen Brennelements (98) aufweist.

4. Kerntechnische Anlage nach einem der Ansprüche 1 bis 3, wobei das Kühlelement (2) als Einhängekühlelement zum Einhängen in das Brennelementgestell (92) ausgebildet ist.

5. Kerntechnische Anlage nach einem der Ansprüche 1 bis 4, wobei das Kühlelement (2) mindestens einen Kühlmittelkanal (20, 56) zur Durchleitung eines in dem Kühlkreislauf (120) zirkulierenden Kühlmittels umfasst.

6. Kerntechnische Anlage nach einem der Ansprüche 1 bis 5, wobei das Kühlelement (2) mindestens einen Kanal oder Zwischenraum (130) zur Durchleitung von in dem Brennelementbecken (115) befindlicher Kühlflüssigkeit umfasst.

7. Kerntechnische Anlage nach einem der Ansprüche 1 bis 6, wobei das Kühlelement (2) wenigstens einen Kondensatkanal (20) zur Zuführung eines flüssigen Kühlmittels in einen Kondensatsammler (50) aufweist, wobei ferner das Kühlelement wenigstens einen Verdampferkanal (56) zur Führung des darin verdampfenden Kühlmittels in einen Dampfsammler (62) umfasst, und wobei das Kühlelement (2) weiterhin eine Vorlaufleitung (32) und eine Rücklaufleitung (68) zum Anschluss an den Kühlkreislauf (120) umfasst.

## Claims

1. Nuclear facility comprising a fuel-element pond (115), which is filled with a cooling liquid and in which a fuel-element rack (92) is arranged, which comprises compartments (104) for receiving fuel elements (98), at least one cooling element (2), which acts as a heat exchanger and which can be connected into a cooling circuit (120) and through which a coolant can flow, being immersed in the cooling liquid,
**characterised in that**,
during use, the fuel elements (98) which are received in the compartments (104) are in direct contact with the cooling liquid in the fuel-element pond (115), and **in that** the cooling element (2) is arranged in one of the compartments (104) instead of a fuel element (98).

2. Nuclear facility according to claim 1, wherein the cooling element (2) is designed for insertion in one of the compartments (104) in the fuel-element rack (92).

3. Nuclear facility according to claim 2, wherein the cooling element (2) has the dimensions, at least in terms of the cross-section thereof, of a fuel element (98) which is provided to be inserted in the fuel-element rack (92).

4. Nuclear facility according to any of claims 1 to 3, wherein the cooling element (2) is in the form of a suspension cooling element for suspension in the fuel-element rack (92).

5. Nuclear facility according to any of claims 1 to 4, wherein the cooling element (2) comprises at least one coolant channel (20, 56) for the passage of a coolant circulating in the cooling circuit (120).

6. Nuclear facility according to any of claims 1 to 5, wherein the cooling element comprises at least one channel or intermediate space (130) for the passage of cooling liquid located in the fuel-element pond (115).

7. Nuclear facility according to any of claims 1 to 6, wherein the cooling element (2) comprises at least one condensate channel (20) for feeding a liquid coolant into a condensate collector (50), wherein the cooling element further comprises at least one vaporiser channel (56) for conducting the coolant vaporised therein into a vapour collector (62), and wherein the cooling element (2) further comprises a supply line (32) and a return line (68) for connection to the cooling circuit (120).

## Revendications

1. Installation nucléaire comprenant une piscine de refroidissement (115), qui est remplie d'un liquide de refroidissement et dans laquelle un bâti d'éléments de combustible (92) est disposé, qui comprend des compartiments (104) pour recevoir des éléments de combustible (98), au moins un élément de refroidissement (2), qui agit comme un échangeur de chaleur et qui peut être connecté dans un circuit de refroidissement (120) et qui peut être parcouru par un liquide de refroidissement, étant plongé dans le liquide de refroidissement,
**caractérisée en ce que**,
pendant l'utilisation, les éléments de combustible (98) qui sont reçus dans les compartiments (104) sont en contact direct avec le liquide de refroidissement dans la piscine de refroidissement (115), et **en ce que** l'élément de refroidissement (2) est disposé dans un des compartiments (104) à la place d'un élément de combustible (98).

2. Installation nucléaire selon la revendication 1, dans laquelle l'élément de refroidissement (2) est conçu pour l'insertion dans un des compartiments (104) dans le bâti d'éléments de combustible (92).

3. Installation nucléaire selon la revendication 2, dans laquelle l'élément de refroidissement (2) a les dimensions, au moins en ce qui concerne sa section, d'un élément de combustible (98) prévu pour être inséré dans le bâti d'éléments de combustible (92).

4. Installation nucléaire selon l'une quelconque des revendications 1 à 3, dans laquelle l'élément de refroidissement (2) a la forme d'un élément de refroidissement de suspension pour être suspendu dans le bâti d'éléments de combustible (92).

5. Installation nucléaire selon l'une quelconque des revendications 1 à 4, dans laquelle l'élément de refroidissement (2) comprend au moins un canal de liquide de refroidissement (20, 56) pour le passage d'un liquide de refroidissement circulant dans le circuit de refroidissement (120).

6. Installation nucléaire selon l'une quelconque des revendications 1 à 5, dans laquelle l'élément de refroidissement comprend au moins un canal ou espace intermédiaire (130) pour le passage du liquide de refroidissement qui se trouve dans la piscine de refroidissement (115).

7. Installation nucléaire selon l'une quelconque des revendications 1 à 6, dans laquelle l'élément de refroidissement (2) comprend au moins un canal de condensat (20) pour alimenter un fluide de refroidissement liquide dans un collecteur de condensat (50), dans laquelle l'élément de refroidissement comprend en outre au moins un canal vaporisateur (56) pour guider le liquide de refroidissement vaporisé là-dedans, dans un collecteur de vapeur (62), et dans laquelle l'élément de refroidissement (2) comprend en outre une conduite d'alimentation (32) et une conduite de retour (68) pour être connectées au circuit de refroidissement (120).
